# EUROPEAN PATENT APPLICATION

(11) **EP 4 741 988 A1**
(43) Date of publication of application: **13.05.2026**
(21) Application number: 24868455.7
(22) Date of filing: 25.07.2024
(51) Int. Cl.: G06F 1/16

(54) **ELECTRONIC DEVICE INCLUDING BENDABLE DISPLAY**

(30) Priority: 18.09.2023 KR 20230123849; 10.11.2023 KR 20230155109
(71) Applicant: Samsung Electronics Co., Ltd., Suwon-si, Gyeonggi-do 16677 (KR)
(72) Inventor: BAE, Jaehyun, Suwon-si, Gyeonggi-do 16677 (KR); KIM, Minsoo, Suwon-si, Gyeonggi-do 16677 (KR); KIM, Yongwoon, Suwon-si, Gyeonggi-do 16677 (KR); KIM, Taejeong, Suwon-si, Gyeonggi-do 16677 (KR); LEE, Soogyu, Suwon-si, Gyeonggi-do 16677 (KR); HAN, Yonggil, Suwon-si, Gyeonggi-do 16677 (KR)
(74) Representative: Gulde & Partner
(86) International application number: PCT/KR2024/010852
(87) International publication number: WO 2025/063475

(57) **Abstract**

The electronic device may include a glass cover, wherein the glass cover includes: first, second, and third flat portions accommodated in first, second, and third housing portions, respectively, and maintained to be substantially flat; a first non-flat portion positioned between the first flat portion and the second flat portion and having at least a portion accommodated in a first hinge housing portion; a second non-flat portion extending from the second flat portion in a direction opposite to the first non-flat portion and having at least a portion accommodated in one end of a second hinge housing portion; a third non-flat portion extending from the third flat portion in a direction toward the second non-flat portion and having at least a portion accommodated in the other end of the second hinge housing portion; and a fourth flat portion positioned between the second non-flat portion and the third non-flat portion and accommodated in the second hinge housing portion so as to remain substantially flat in a process in which the second housing portion and the third housing portion are bent.

## Description

### TECHNICAL FIELD

The disclosure relates to an electronic device including a bendable display.

### BACKGROUND ART

In order to improve portability and convenience, electronic devices are being developed in various forms rather than a uniform rectangular shape. With advances in technology, there is growing demand for electronic devices that are easy to carry and that provide a large screen during use by including a bendable display.

However, the foregoing should not be construed as having been acknowledged by the applicant as a prior art to the description set forth in the disclosure, but should be construed only as a related art to the invention described herein.

### DISCLOSURE OF THE INVENTION

### TECHNICAL SOLUTIONS

An electronic device 101, 201, or 501 according to an embodiment includes a bendable housing 202 or 502 including a first housing portion 210 or 510, a second housing portion 220 or 520, a third housing portion 230 or 530, a first hinge housing portion 215 or 515 rotatably connecting the first housing portion 210 or 510 to the second housing portion 220 or 520 and having a first width, and a second hinge housing portion 225 or 525 rotatably connecting the second housing portion 220 or 520 to a third housing portion 230 or 530 and having a second width that is greater than the first width and a display module 160 or 460 including a flexible display panel 460-1 accommodated in the first housing portion 210 or 510, the first hinge housing portion 215 or 515, the second housing portion 220 or 520, the second hinge housing portion 225 or 525, and the third housing portion 230 or 530, and a glass cover 460-2 disposed on the flexible display panel 460-1. The glass cover 260, 460-2a, 460-2b, or 560 may include a first planar portion 261 or 561 accommodated in the first housing portion 210 or 510 and maintained substantially planar, a second planar portion 262 or 562 accommodated in the second housing portion 220 or 520 and maintained substantially planar, a third planar portion 263 or 563 accommodated in the third housing portion 230 or 530 and maintained substantially planar, a first non-planar portion 265 or 565 positioned between the first planar portion 261 or 561 and the second planar portion 262 or 562 and at least partially accommodated in the first hinge housing portion 215 or 515 so as to be at least partially bendable according to a relative bending operation of the first housing portion 210 or 510 and the second housing portion 220 or 520, and a second non-planar portion 266-1 or 566-1 extending from the second planar portion 262 or 562 in a direction opposite to the first non-planar portion 265 or 565 and at least partially accommodated in one end of the second hinge housing portion 225 or 525 so as to be at least partially bendable according to a relative bending operation of the second housing portion 220 or 520 and the third housing portion 230 or 530, a third non-planar portion 266-2 or 566-2 extending in a direction from the third planar portion 263 or 563 to the second non-planar portion 266-1 or 566-1 and at least partially accommodated in another end of the second hinge housing portion 225 or 525 so as to be at least partially bendable according to a relative bending operation of the second housing portion 220 or 520 and the third housing portion 230 or 530, and a fourth planar portion 266-3 or 566-3 positioned between the second non-planar portion 266-1 or 566-1 and the third non-planar portion 266-2 or 566-2 and accommodated in the second hinge housing portion 225 or 525 so as to be maintained substantially planar during relative bending of the second housing portion 220 or 520 and the third housing portion 230 or 530 such that at least portions thereof overlap each other.

An electronic device 101, 201, or 501 according to an embodiment includes a bendable housing 202 or 502 including a first housing portion 210 or 510, a second housing portion 220 or 520, a third housing portion 230 or 530, a first hinge housing portion 215 or 515 rotatably connecting the first housing portion 210 or 510 to the second housing portion 220 or 520 and having a first width and a second hinge housing portion 225 or 525 rotatably connecting the second housing portion 220 or 520 to the third housing portion 230 or 530 and having a second width that is greater than the first width and a display module 160 or 460 including a flexible display panel 460-1 accommodated in the first housing portion 210 or 510, the first hinge housing portion 215 or 515, the second housing portion 220 or 520, the second hinge housing portion 225 or 525, and the third housing portion 230 or 530, and a display module 160 or 460 including a glass cover 260, 460-2a, 460-2b, or 560 disposed on the flexible display panel 460-1. The glass cover 260, 460-2a, 460-2b, or 560 may include a first planar portion 261 or 561 accommodated in the first housing portion 210 or 510 and maintained substantially planar, a second planar portion 262 or 562 accommodated in the second housing portion 220 or 520 and maintained substantially planar, a third planar portion 263 or 563 accommodated in the third housing portion 230 or 530 and maintained substantially planar, a first non-planar portion 265 or 565 positioned between the first planar portion 261 or 561 and the second planar portion 262 or 562 and at least partially accommodated in the first hinge housing portion 215 or 515 so as to be at least partially bendable according to a relative bending operation of the first housing portion 210 or 510 and the second housing portion 220 or 520, and a second non-planar portion 266-1 or 566-1 extending from the second planar portion 262 or 562 in a direction opposite to the first non-planar portion 265 or 565 and at least partially accommodated in one end of the second hinge housing portion 225 or 525 so as to be at least partially bendable according to a relative bending operation of the second housing portion 220 or 520 and the third housing portion 230 or 530, a third non-planar portion 266-2 or 566-2 extending in a direction from the third planar portion 263 or 563 to the second non-planar portion 266-1 or 566-1 and at least partially accommodated in another end of the second hinge housing portion 225 or 525 so as to be at least partially bendable according to a relative bending operation of the second housing portion 220 or 520 and the third housing portion 230 or 530, and a fourth planar portion 266-3 or 566-3 positioned between the second non-planar portion 266-1 or 566-1 and the third non-planar portion 266-2 or 566-2 and accommodated in the second hinge housing portion 225 or 525 so as to be maintained substantially planar during relative bending of the second housing portion 220 or 520 and the third housing portion 230 or 530 such that at least portions thereof overlap each other. The fourth planar portion 266-3 or 566-3 may have less flexibility than flexibility of each of the first non-planar portion 265 or 565, the second non-planar portion 266-1 or 566-1, and the third non-planar portion 266-2 or 566-2. Each of the first non-planar portion 265 or 565, the second non-planar portion 266-1 or 566-1, and the third non-planar portion 266-2 or 566-2 may include a recess R1, R2-1, or R2-2 formed in a thickness direction or a pattern region P1, P2-1, or P2-2 in which a pattern is formed in a longitudinal direction.

An electronic device 501 according to an embodiment includes a bendable housing 502 including a first housing portion 510, a second housing portion 520, a third housing portion 530, a fourth housing portion 540, a first hinge housing portion 515 rotatably connecting the first housing portion 510 to the second housing portion 520 and having a first width, a second hinge housing portion 525 rotatably connecting the second housing portion 520 to the third housing portion 530 and having a second width that is greater than the first width, and a third hinge housing portion 535 rotatably connecting the third housing portion 530 to the fourth housing portion 540 and having a third width that is less than the second width and a display module 160 or 460 including a flexible display panel 460-1 accommodated in the first housing portion 510, the first hinge housing portion 515, the second housing portion 520, the second hinge housing portion 525, and the third housing portion 530, and a glass cover 560 disposed on the flexible display panel 460-1. The glass cover may include a first planar portion 561 accommodated in the first housing portion 510 and maintained substantially planar, a second planar portion 562 accommodated in the second housing portion 520 and maintained substantially planar, a third planar portion 563 accommodated in the third housing portion 530 and maintained substantially planar, a first non-planar portion 565 positioned between the first planar portion 561 and the second planar portion 562 and at least partially accommodated in the first hinge housing portion 515 so as to be at least partially bendable according to a relative bending operation of the first housing portion 510 and the second housing portion 520, a second non-planar portion 566-1 extending from the second planar portion 562 in a direction opposite to the first non-planar portion 565 and at least partially accommodated in one end of the second hinge housing portion 525 so as to be at least partially bendable according to a relative bending operation of the second housing portion 520 and the third housing portion 530, a third non-planar portion 566-2 extending from the third planar portion 563 to the second non-planar portion 566-1 and at least partially accommodated in another end of the second hinge housing portion 525 so as to be at least partially bendable according to a relative bending operation of the second housing portion 520 and the third housing portion 530, a fourth planar portion 566-3 positioned between the second non-planar portion 566-1 and the third non-planar portion 566-2 and accommodated in the second hinge housing portion 525 so as to be maintained substantially planar during relative bending of the second housing portion 520 and the third housing portion 530 such that at least portions thereof overlap each other, a fifth planar portion 564 accommodated in the fourth housing portion 540 and maintained substantially planar, and a fourth non-planar portion 567 extending in a direction from the fifth planar portion 564 to the third planar portion 563 and at least partially accommodated in the third hinge housing portion 535 so as to be at least partially bendable according to a relative bending operation of the third housing portion 530 and the fourth housing portion 540. The fourth planar portion 566-3 may have less flexibility than flexibility of each of the first non-planar portion 565, the second non-planar portion 566-1, and the third non-planar portion 566-2, and each of the first non-planar portion 565, the second non-planar portion 566-1, the third non-planar portion 566-2, and the fourth non-planar portion 567 may include a recess formed in a thickness direction or a pattern region in which a pattern is formed in a longitudinal direction.

### BRIEF DESCRIPTION OF DRAWINGS

The above and other aspects 201c, features, and advantages of certain embodiments of the present disclosure will be more apparent from the following detailed description, taken in conjunction with the accompanying drawings.
FIG. 1 is a block diagram of an electronic device in a network environment according to an embodiment.
FIG. 2A is a perspective view of an electronic device in an unfolded state, according to an embodiment.
FIG. 2B is a rear view of the electronic device in the unfolded state, according to an embodiment.
FIG. 2C is a perspective view of the electronic device in a folded state, according to an embodiment.
FIG. 3A is a schematic view illustrating a bendable housing and a display module, based on the unfolded state of the electronic device illustrated in FIG. 2A.
FIG. 3B is a schematic view illustrating a glass cover, based on the folded state of the electronic device illustrated in FIG. 2C.
FIG. 3C is a diagram illustrating a bending angle of the electronic device according to an embodiment.
FIG. 4A is a schematic view illustrating a structure of a display module according to an embodiment.
FIG. 4B is a cross-sectional view of a glass cover in which a recess is formed, according to an embodiment.
FIG. 4C is a cross-sectional view of the glass cover in which a recess is formed, according to an embodiment.
FIG. 4D is a schematic view illustrating a structure of the display module according to an embodiment.
FIG. 4E is a cross-sectional view of the glass cover in which a pattern region is formed, according to an embodiment.
FIG. 5A is a perspective view of an electronic device in an unfolded state according to an embodiment.
FIG. 5B is a diagram illustrating a bending angle of the electronic device according to an embodiment.
FIG. 5C is a view of the electronic device in a folded state according to an embodiment.
FIG. 5D is a cross-sectional view of the electronic device in a folded state in the +Y-axis direction according to an embodiment.
FIG. 5E is a schematic view illustrating a glass cover based on the folded state of the electronic device illustrated in FIG. 5D.
FIG. 5F is a cross-sectional view of the glass cover in which a recess is formed, according to an embodiment.

### BEST MODE FOR CARRYING OUT THE INVENTION

Hereinafter, embodiments are described in detail with reference to the accompanying drawings. When describing the embodiments with reference to the accompanying drawings, like reference numerals refer to like elements and a repeated description related thereto will be omitted.

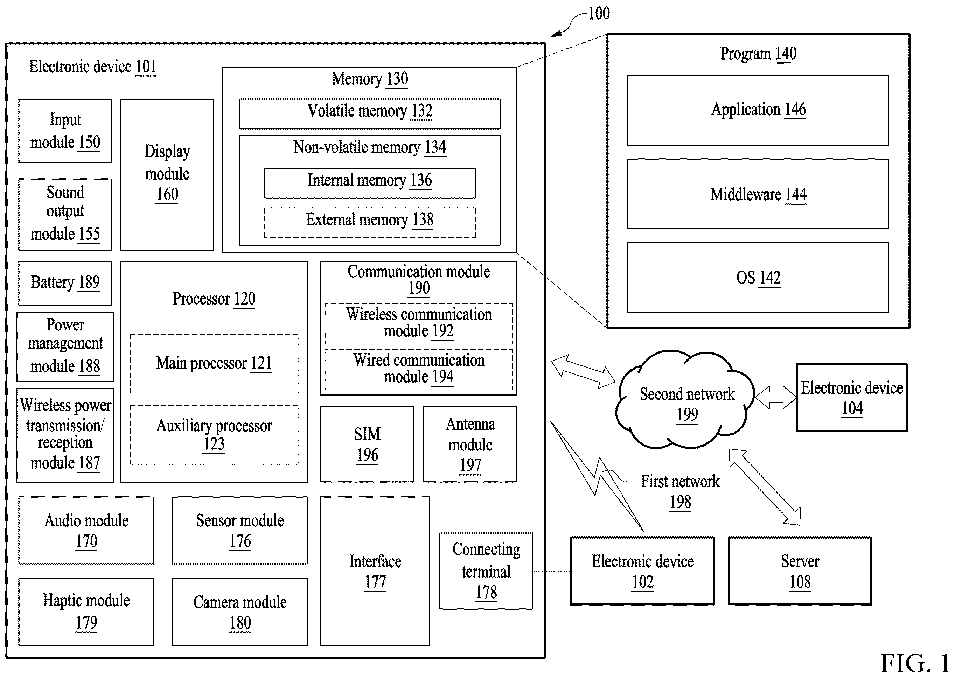

FIG. 1 is a block diagram of an electronic device in a network environment, according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via an external electronic device (e.g., the electronic device 102) (e.g., a speaker or headphones) directly (e.g., wiredly) or wirelessly coupled with the sound output module 155 or the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B or C," "at least one of A, B and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and do not limit the components in other aspects 201c (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the component may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more of instructions that are stored in a storage medium (e.g., internal memory 136 or external memory 138) that is readable by a machine (e.g., a bendable electronic device 101). For example, a processor (e.g., the processor 120) of the machine (e.g., the bendable electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

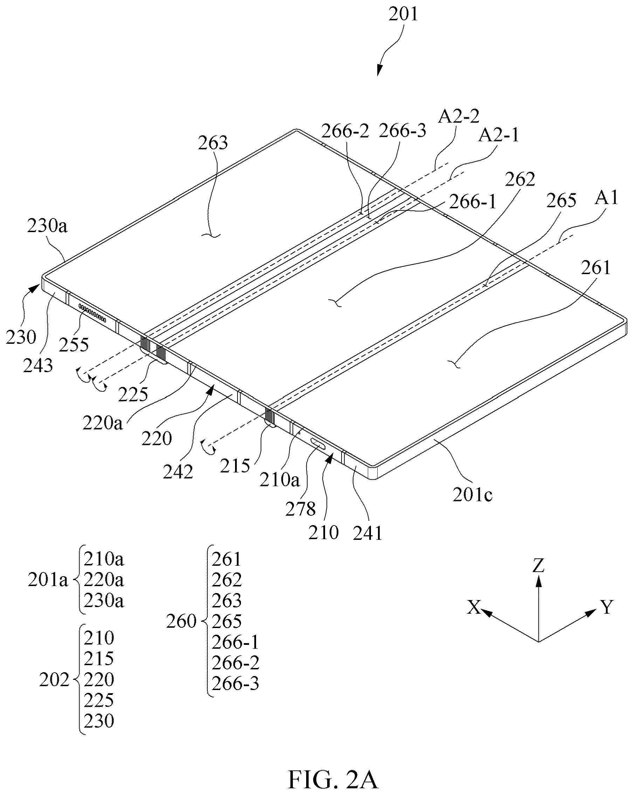

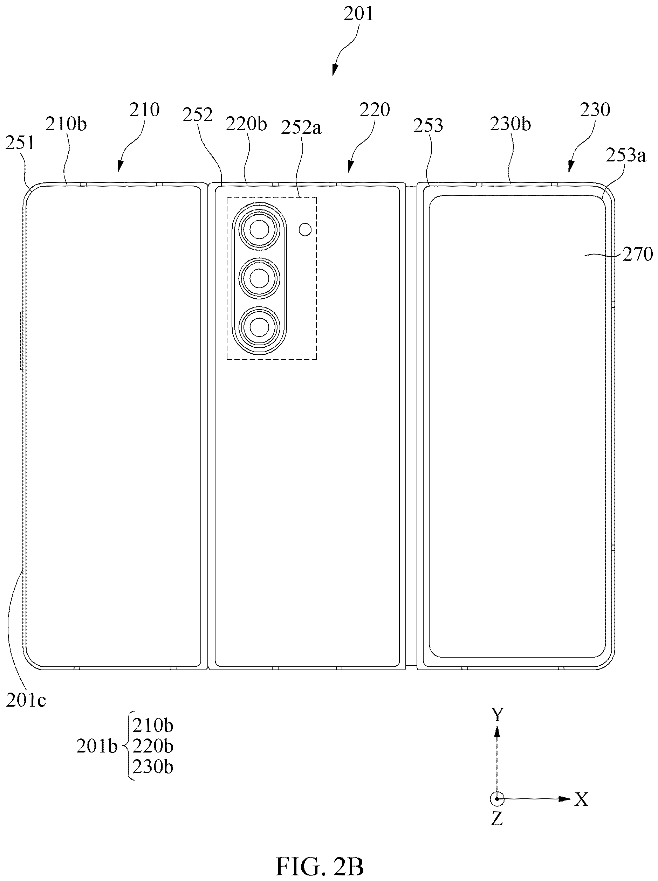

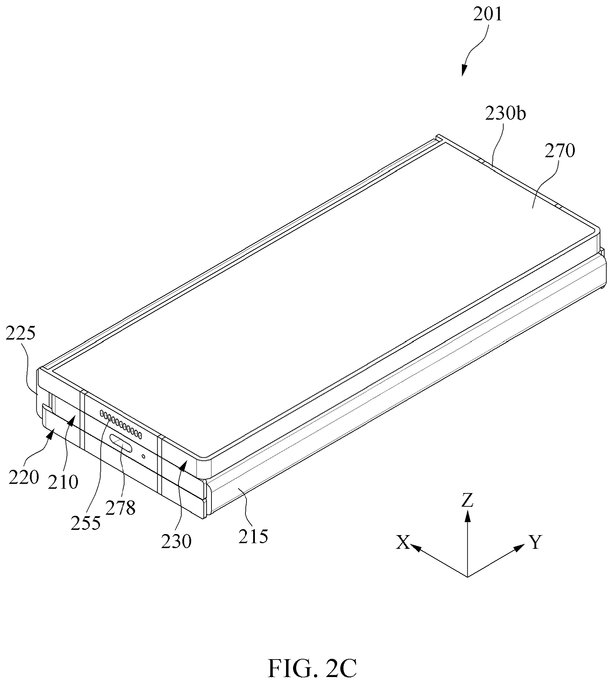

FIG. 2A is a perspective view of an electronic device in an unfolded state, according to an embodiment, FIG. 2B is a rear view of the electronic device in the unfolded state, according to an embodiment, and FIG. 2C is a perspective view of the electronic device in a folded state, according to an embodiment.

Referring to FIGS. 2A to 2C, an electronic device 201 according to an embodiment may have a shape that changes depending on a usage state. For example, the electronic device 201 may be provided in a foldable type that may be folded or unfolded according to the usage state. In an embodiment, the electronic device 201 may include a first housing portion 210, a second housing portion 220, a third housing portion 230, a display module (e.g., the display module 160 of FIG. 1), a first hinge housing portion 215, and a second hinge housing portion 225.

Hereinafter, for ease of description, a surface of the display module (e.g., the display module 160 of FIG. 1) that is visually exposed to the outside may be referred to as a front surface 201a (e.g., a surface facing the +Z-axis direction of FIG. 2A) of the electronic device 201, a surface opposite to the front surface 201a may be referred to as a rear surface 201b (e.g., a surface facing the -Z-axis direction of FIG. 2A) of the electronic device 201, and a surface surrounding an internal space between the front surface 201a and the rear surface 201b may be referred to as a side surface 201c of the electronic device 201.

In an embodiment, the first housing portion 210, the second housing portion 220, and the third housing portion 230 may form the exterior of the electronic device 201. In an embodiment, the first housing portion 210 may include a first front surface 210a and a first rear surface 210b. In an embodiment, the second housing portion 220 may include a second front surface 220a and a second rear surface 220b. In an embodiment, the third housing portion 230 may include a third front surface 230a and a third rear surface 230b. In an embodiment, the first front surface 210a of the first housing portion 210, the second front surface 220a of the second housing portion 220, and the third front surface 230a of the third housing portion 230 may form the front surface 201a of the electronic device 201 based on the unfolded state of the electronic device 201 as shown in FIG. 2A. In an embodiment, the first rear surface 210b of the first housing portion 210, the second rear surface 220b of the second housing portion 220, and the third rear surface 230b of the third housing portion 230 may form the rear surface 201b of the electronic device 201 based on the unfolded state of the electronic device 201 as shown in FIG. 2B.

In an embodiment, the first housing portion 210, the second housing portion 220, and the third housing portion 230 may each form the side surface 201c that surrounds the internal space between the front surface 201a and the rear surface 201b of the electronic device 201. In an embodiment, the front surface 201a of the electronic device 201 may have a mostly open region such that the display module may be visually exposed to the outside. In an embodiment, the first housing portion 210, the second housing portion 220, and the third housing portion 230 may be rotatably connected to one another by the hinge housing portions 215 and 225 described below.

In an embodiment, the first housing portion 210 may include a first side member 241 that forms a portion of the side surface 201c of the electronic device 201. The second housing portion 220 may include a second side member 242 that forms a portion of the side surface 201c of the electronic device 201. The third housing portion 230 may include a third side member 243 that forms a portion of the side surface 201c of the electronic device 201.

In an embodiment, a first rear cover 251 may be disposed on the first rear surface 210b of the first housing portion 210. At least a portion of the edges of the first rear cover 251 may be surrounded by the first housing portion 210. In an embodiment, a second rear cover 252 may be disposed on the second rear surface 220b of the second housing portion 220. At least a portion of the edges of the second rear cover 252 may be surrounded by the second housing portion 220. In an embodiment, a third rear cover 253 may be disposed on the third rear surface 230b of the third housing portion 230. At least a portion of the edges of the third rear cover 253 may be surrounded by the third housing portion 230. In an embodiment, the first rear cover 251 may be formed integrally with the first housing portion 210, the second rear cover 252 may be formed integrally with the second housing portion 220, and the third rear cover 253 may be formed integrally with the third housing portion 230.

In an embodiment, the first housing portion 210, the second housing portion 220, the third housing portion 230, the first rear cover 251, the second rear cover 252, and the third rear cover 253 may be coupled to one another to provide a space in which various components (e.g., a PCB, the antenna module 197 of FIG. 1, the sensor module 176 of FIG. 1, and the battery 189 of FIG. 1) of the electronic device 201 may be disposed. In an embodiment, at least one component may be visually exposed from the rear surface 201b of the electronic device 201. For example, at least one component may be visually exposed through a second rear region 252a of the second rear cover 252. Here, a component may include a proximity sensor, a rear camera module, and/or a flash. In an embodiment, at least a portion of a sub-display 270 may be visually exposed through a third rear region 253a of the third rear cover 253.

In an embodiment, the first hinge housing portion 215 may rotatably connect the first housing portion 210 to the second housing portion 220. In an embodiment, the first housing portion 210 and the second housing portion 220 may be relatively rotated about a first bending axis A1 (e.g., an axis parallel to the Y-axis of FIG. 2A) by the first hinge housing portion 215.

In an embodiment, the second hinge housing portion 225 may rotatably connect the second housing portion 220 to the third housing portion 230. In an embodiment, the second housing portion 220 and the third housing portion 230 may be relatively rotated about two bending axes (e.g., a second bending axis A2-1 and a third bending axis A2-2) by the second hinge housing portion 225.

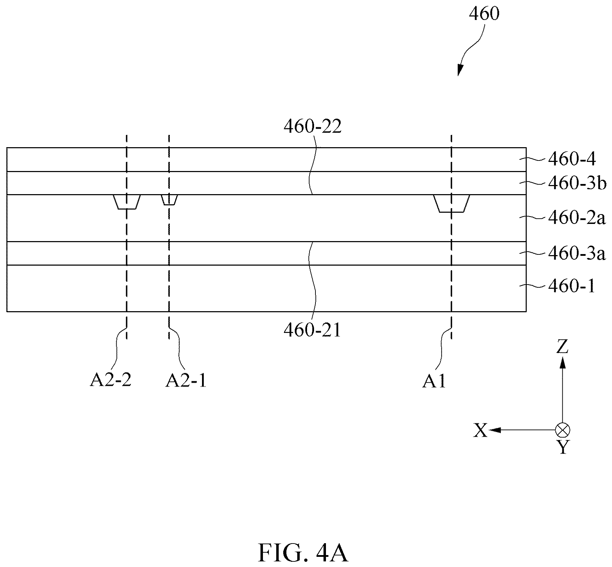

In an embodiment, the display module (e.g., the display module 160 of FIG. 1) may the electronic device 201 may include a display panel (e.g., a flexible display panel 460-1 of FIG. 4A) and a glass cover 260 disposed on the display panel to cover the display panel.

In an embodiment, the display panel may include a flexible display panel (e.g., the flexible display panel 460-1 of FIG. 4A) formed of a flexible material. In an embodiment, at least a partial region of the flexible display panel may transform into a flat surface or a curved surface such that the shape of the flexible display panel may change in response to shape transformation (e.g., an opening and closing operation of the electronic device 201 between the unfolded state (or open state) of FIG. 2A and the folded state (or closed state) of FIG. 2C) of the electronic device 201. In an embodiment, the flexible display panel may be accommodated in the first housing portion 210, the first hinge housing portion 215, the second housing portion 220, the second hinge housing portion 225, and the third housing portion 230.

In an embodiment, the glass cover 260 may include a first planar portion 261 accommodated in the first housing portion 210, a second planar portion 262 accommodated in the second housing portion 220, a third planar portion 263 accommodated in the third housing portion 230, a first non-planar portion 265 accommodated in the first hinge housing portion 215, and a second non-planar portion 266-1 and a third non-planar portion 266-2 accommodated in the second hinge housing portion 225.

In an embodiment, the first planar portion 261 of the glass cover 260 may be accommodated and/or supported by the first housing portion 210 disposed on the rear surface of the first planar portion 261. In an embodiment, the second planar portion 262 of the glass cover 260 may be supported by the second housing portion 220 disposed on the rear surface of the second planar portion 262. In an embodiment, the third planar portion 263 of the glass cover 260 may be supported by the third housing portion 230 disposed on the rear surface of the third planar portion 263.

In an embodiment, the first non-planar portion 265 may be positioned between the first planar portion 261 and the second planar portion 262 and may be at least partially accommodated in the first hinge housing portion 215. In an embodiment, the first non-planar portion 265 may rotatably connect the first planar portion 261 to the second planar portion 262. In an embodiment, the first non-planar portion 265 may be at least partially bent according to a relative bending operation of the first housing portion 210 and the second housing portion 220. For example, the first non-planar portion 265 may be at least partially bent about the first bending axis A1.

In an embodiment, the second non-planar portion 266-1 may be connected to the second planar portion 262. In an embodiment, the second non-planar portion 266-1 may extend from the second planar portion 262 in a direction opposite to the first non-planar portion 265. In an embodiment, the second non-planar portion 266-1 may be at least partially accommodated in one end of the second hinge housing portion 225 so as to be at least partially bendable according to a relative bending operation of the second housing portion 220 and the third housing portion 230. In an embodiment, the second non-planar portion 266-1 may be at least partially bent about the second bending axis A2-1 that is parallel to the first bending axis A1. In an embodiment, the second non-planar portion 266-1 may be supported by the second hinge housing portion 225.

In an embodiment, the third non-planar portion 266-2 may be connected to the third planar portion 263. In an embodiment, the third non-planar portion 266-2 may extend in a direction from the third planar portion 263 to the second non-planar portion 266-1. In an embodiment, the third non-planar portion 266-2 may be at least partially accommodated in the other end of the second hinge housing portion 225 so as to be at least partially bent according to a relative bending operation of the second housing portion 220 and the third housing portion 230. In an embodiment, the third non-planar portion 266-2 may be at least partially bent about the third bending axis A2-2 that is parallel to the second bending axis A2-1. In an embodiment, the third non-planar portion 266-2 may be supported by the second hinge housing portion 225.

In an embodiment, the fourth planar portion 266-3 of the glass cover 260 may be positioned between the second non-planar portion 266-1 and the third non-planar portion 266-2 and may connect the second non-planar portion 266-1 to the third non-planar portion 266-2. In an embodiment, the fourth planar portion 266-3 may be positioned between the second non-planar portion 266-1 and the third non-planar portion 266-2 and may be accommodated in the second hinge housing portion 225 so as to be maintained substantially planar during relative bending of the second housing portion 220 and the third housing portion 230 such that at least portions thereof overlap each other. In an embodiment, the fourth planar portion 266-3 may connect the second non-planar portion 266-1 to the third non-planar portion 266-2 while maintaining a substantially planar shape regardless of a change in the state of the electronic device 201 (e.g., a state change between the unfolded state of the electronic device 201 of FIG. 2A and the folded state of the electronic device 201 of FIG. 2C). In an embodiment, the fourth planar portion 266-3 may have less flexibility than the flexibility of each of the first non-planar portion 265, the second non-planar portion 266-1, and the third non-planar portion 266-2.

In an embodiment, the electronic device 201 may include a connecting terminal 278 (e.g., the connecting terminal 178 of FIG. 1). In an embodiment, the connecting terminal 278 may be positioned on the side surface 201c. For example, when the electronic device 201 is viewed from one direction (e.g., +Y axis direction), the connecting terminal 278 may be positioned on the right side of the side surface 201c, and a sound output module 255 may be positioned on one side (e.g., left side) with respect to the connecting terminal 278.

In an embodiment, the electronic device 201 may include the sound output module 255 (e.g., the sound output module 155 of FIG. 1). In an embodiment, the sound output module 255 may be positioned on the side surface 201c. In an embodiment, the sound output module 255 may include one or more holes.

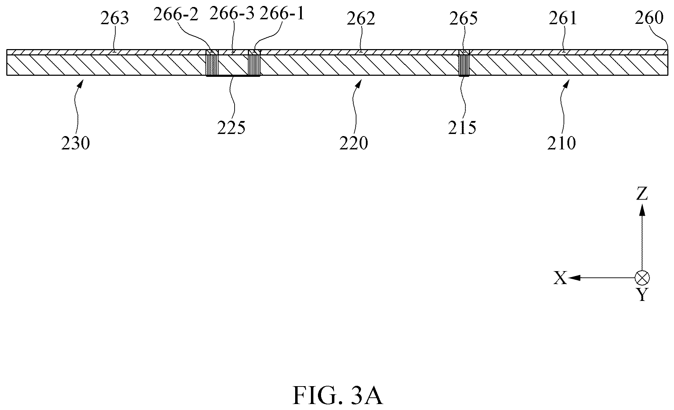

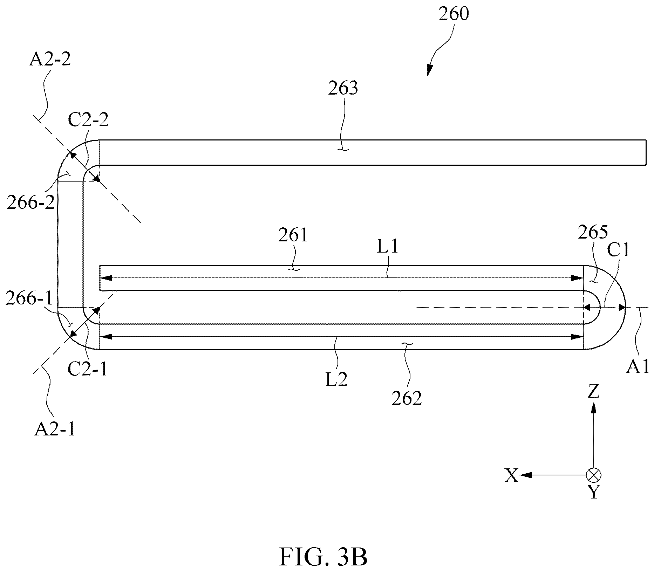

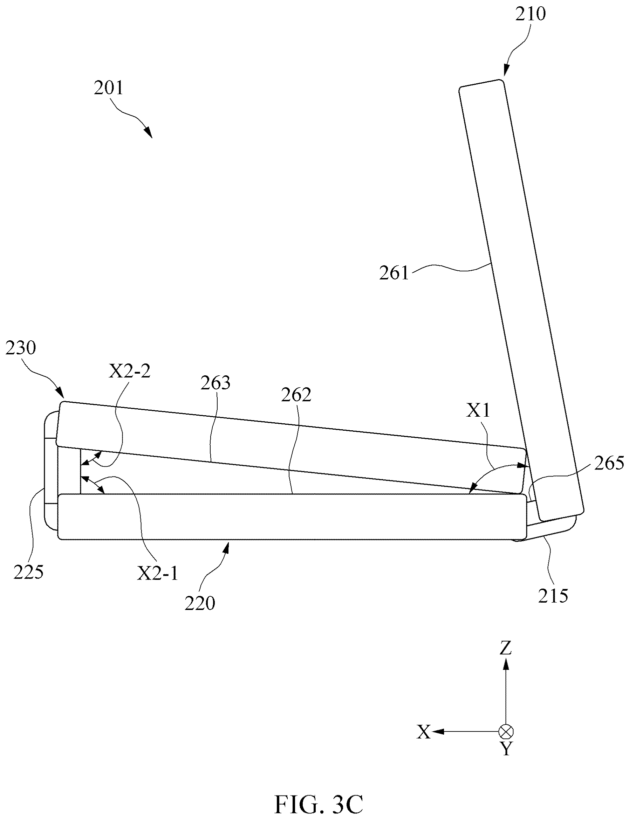

FIG. 3A is a schematic view illustrating a bendable housing and a display module, based on the unfolded state of the electronic device illustrated in FIG. 2A, FIG. 3B is a schematic view illustrating a glass cover, based on the folded state of the electronic device illustrated in FIG. 2C, and FIG. 3C is a diagram illustrating a bending angle of the electronic device according to an embodiment.

Referring to FIGS. 3A to 3C, the electronic device 201 according to an embodiment (e.g., the electronic device 201 of FIG. 2A) may include the first housing portion 210 (e.g., the first housing portion 210 of FIG. 2A), the second housing portion 220 (e.g., the second housing portion 220 of FIG. 2A), the third housing portion 230 (e.g., the third housing portion 230 of FIG. 2A), the first hinge housing portion 215 (e.g., the first hinge housing portion 215 of FIG. 2A) rotatably connecting the first housing portion 210 to the second housing portion 220, the second hinge housing portion 225 (e.g., the second hinge housing portion 225 of FIG. 2A) rotatably connecting the second housing portion 220 to the third housing portion 230, and a display module (e.g., the display module 160 of FIG. 1).

Hereinafter, the unfolded state and the folded state of the electronic device 201 according to an embodiment are defined. In an embodiment, the electronic device 201 may have a fully unfolded shape in an unfolded state. For example, the unfolded state of the electronic device 201 may be a state in which the first planar portion 261, the second planar portion 262, and the third planar portion 263 of the glass cover 260 form one plane. In an embodiment, the electronic device 201 may have a minimally folded shape in a folded state. For example, the folded state of the electronic device 201 may be a state in which the first planar portion 261 of the glass cover 260 may face the second planar portion 262, and the third planar portion 263 may face the second planar portion 262 with the first planar portion 261 interposed therebetween. In an embodiment, when the electronic device 201 performs a bending operation between the unfolded state and the folded state, the first planar portion 261 of the glass cover 260 may cover the second planar portion 262, the first planar portion 261 may cover the second planar portion 262, and the third planar portion 263 may cover the first planar portion 261. However, this is just one example, and the definitions of the folded and unfolded states of the electronic device 201 may vary depending on the shape of the electronic device.

Hereinafter, in the process in which the electronic device 201 performs a bending operation between the folded state and the unfolded state, the size of a region in which the bending operation is performed may be referred to as a bendable angle range. In an embodiment, based on the folded state, at least a portion of the electronic device 201, for example, a folded portion, may have a predetermined radius of curvature based on a cross-section perpendicular to a bending axis (e.g., the first bending axis A1 parallel to the Y-axis direction) depending on a bending state. In an embodiment, the radius of curvature and the bendable angle range of the electronic device 201 may be proportional to each other.

In an embodiment, in the process in which the electronic device 201 performs a bending operation between the folded state and the unfolded state, each of the first non-planar portion 265, the second non-planar portion 266-1, and the third non-planar portion 266-2 of the glass cover 260 may be at least partially bent. In the folded state according to an embodiment, the first non-planar portion 265 of the glass cover 260 may have a first radius of curvature C1, the second non-planar portion 266-1 may have a second radius of curvature C2-1, and the third non-planar portion 266-2 may have a third radius of curvature C2-2. In an embodiment, the first radius of curvature C1 may be greater than the second radius of curvature C2-1 and the third radius of curvature C2-2. In an embodiment, the second radius of curvature C2-1 may be substantially the same as the third radius of curvature C2-2.

In an embodiment, in the process in which the electronic device 201 performs a bending operation between the folded state and the unfolded state, the first planar portion 261 and the second planar portion 262 of the glass cover 260 may form a first bending angle X1 with the first non-planar portion 265 interposed therebetween. In an embodiment, the second planar portion 262 and the fourth planar portion 266-3 may form a second bending angle X2-1. In an embodiment, the third planar portion 263 and the fourth planar portion 266-3 may form a third bending angle X2-2. In an embodiment, the first bending angle X1 may have a minimum value (e.g., 0 degrees) based on a state in which the first planar portion 261 is maximally folded relative to the second planar portion 262. In an embodiment, the second bending angle X2-1 may have a minimum value (e.g., about 90 degrees) based on a state in which the fourth planar portion 266-3 is maximally folded relative to the second planar portion 262. In an embodiment, the third bending angle X2-2 may have a minimum value (e.g., about 70 degrees) based on a state in which the third planar portion 263 is maximally folded relative to the fourth planar portion 266-3. In an embodiment, the minimum value (e.g., about 0 degrees) of the first bending angle X1 may be less than the minimum value (e.g., about 70 degrees) of the third bending angle X2-2. In an embodiment, the minimum value (e.g., about 70 degrees) of the third bending angle X2-2 may be less than the minimum value (e.g., about 90 degrees) of the second bending angle X2-1. In an embodiment, a bending angle of about 70 degrees may be, for example, 67 degrees to 73 degrees, for example, 69 degrees to 71 degrees, for example, 69.5 degrees to 70.5 degrees, for example, 69.9 degrees to 70.1 degrees.

In an embodiment, the glass cover 260 may include the fourth planar portion 266-3 having a substantially planar shape, so the size of a dead space formed between the second planar portion 262 and the third planar portion 263 in the folded state may be reduced. In this case, since the first planar portion 261 of the glass cover 260 is positioned in the dead space based on the folded state of the electronic device 201, when the electronic device is viewed in a direction parallel to the first bending axis A1 (e.g., the Y-axis direction of FIG. 2C), a first length L1 of the first planar portion 261 of the display module may be substantially the same as a second length L2 of the second planar portion 262. Accordingly, when the electronic device 201 is folded, the size of the dead space required for the bending operation of the electronic device 201 may be reduced, so the first length L1 (e.g., the length in the +X-axis direction in FIG. 3B) of the first planar portion 261 of the display module facing a non-planar portion (e.g., the second non-planar portion 266-1) in the folded state may be increased. When the electronic device has a structure as shown in FIGS. 3A to 3C, the size of a dead space inside the electronic device may be reduced, and accordingly, an additional internal component may be easily mounted, and an additional display region may be readily secured.

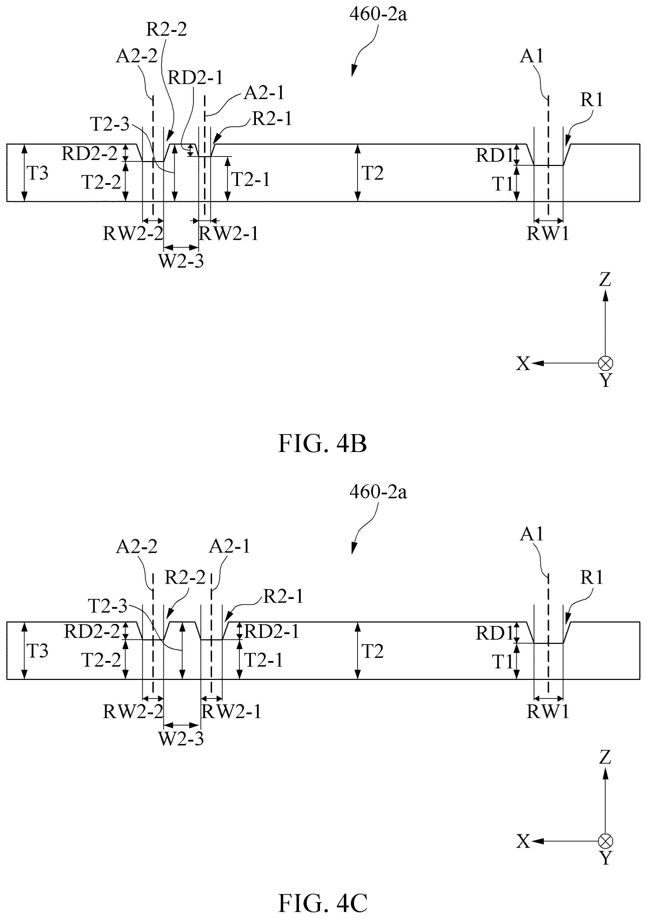

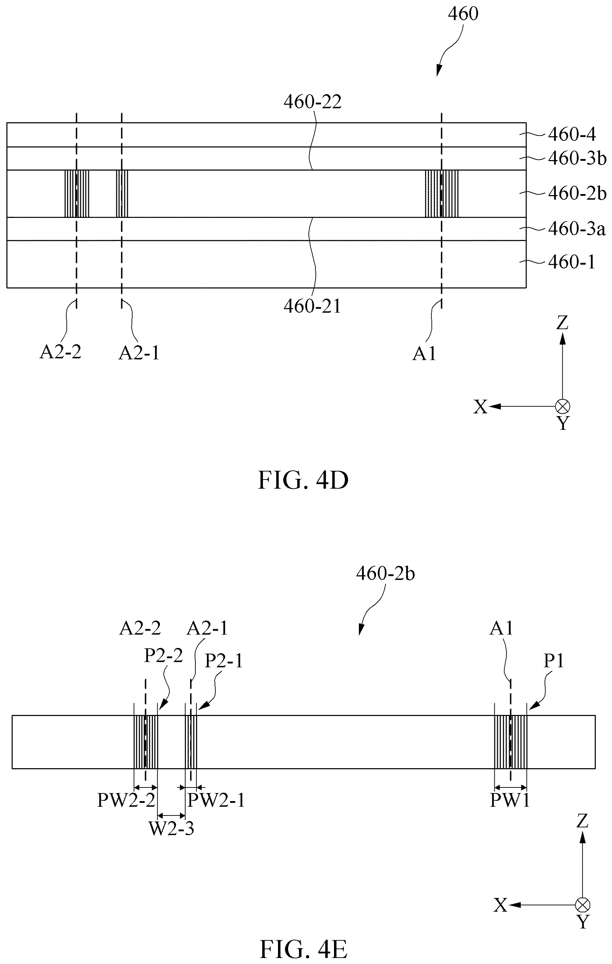

FIG. 4A is a schematic view illustrating a structure of a display module according to an embodiment, FIG. 4B is a cross-sectional view of a glass cover in which a recess is formed, according to an embodiment, FIG. 4C is a cross-sectional view of the glass cover in which a recess is formed, according to an embodiment, FIG. 4D is a schematic view illustrating a structure of the display module according to an embodiment, and FIG. 4E is a cross-sectional view of the glass cover in which a pattern region is formed, according to an embodiment.

Referring to FIGS. 4A to 4E, in an embodiment, a display module 460 may include a flexible display panel 460-1, a glass cover 460-2a or 460-2b covering the flexible display panel 460-1, one or more filling layers 460-3a and 460-3b disposed on the glass cover 460-2a or 460-2b, and a polymer member 460-4 disposed on the surface of the filling layer 460-3a or 460-3b.

In an embodiment, the glass cover 460-2a or 460-2b of the display module 460 may be disposed on the front surface of the flexible display panel 460-1 and may cover the flexible display panel 460-1. In an embodiment, the glass cover 460-2a may protect the flexible display panel 460-1 from an external impact.

In an embodiment, the filling layer 460-3a or 460-3b may be disposed on the surface of the glass cover 460-2a or 460-2b. In an embodiment, the filling layer 460-3a or 460-3b may be disposed on the surface of the glass cover 460-2a or 460-2b so that the surface of the glass cover 460-2a or 460-2b may form a flat plane. The filling layer 460-3a or 460-3b may perform the function of flattening the surface of the glass cover 460-2a or 460-2b. In an embodiment, the number of filling layers 460-3a and 460-3b may be one or more. For example, the first filling layer 460-3a may be disposed between the glass cover 460-2a or 460-2b and the flexible display panel 460-1, and the second filling layer 460-3b may be disposed between the glass cover 460-2a or 460-2b and the polymer member 460-4 described below. In an embodiment, the material of the filling layer 460-3a or 460-3b may include at least one of a pressure-sensitive adhesive (PSA) material and an optical clear resin (OCR) material.

In an embodiment, the polymer member 460-4 may be disposed on the surface of the filling layer 460-3a or 460-3b and may prevent or reduce damage to the filling layer 460-3a or 460-3b due to an external impact. In an embodiment, the polymer member 460-4 may be formed of at least one of plastic and reinforced glass.

In an embodiment, the glass cover 460-2a may have regions respectively corresponding to bending axes A1, A2-1, and A2-2 of the display module 460, and the regions may have different thicknesses from one another.

For example, the glass cover 460-2a may include a first recess R1 formed in a first non-planar portion (e.g., the first non-planar portion 265 of FIG. 2A) along the first bending axis A1, a second recess R2-1 formed in a second non-planar portion (e.g., the second non-planar portion 266-1 of FIG. 2A) along the second bending axis A2-1, and a third recess R2-2 formed in a third non-planar portion (e.g., the third non-planar portion 266-2 of FIG. 2A) along the third bending axis A2-2.

Hereinafter, in describing the first recess R1, the second recess R2-1, and the third recess R2-2, based on a cross-section (e.g., the XZ plane of FIG. 4B) perpendicular to the first bending axis A1, the length in the X-axis direction is referred to as a width, and the length in the Z-axis direction is referred to as a depth.

In an embodiment, as the width and depth of a recess formed in the glass cover 460-2a increase, a bending operation of the electronic device performed with respect to the bending axis positioned in the recess may become easier. For example, the minimum value of the bending angle formed based on the bending axis positioned in the recess may decrease (e.g., decrease from 30 degrees to 0 degrees), or the maximum value may increase (e.g., increase from 120 degrees to 150 degrees). In an embodiment, the width and depth of a recess formed in the glass cover 460-2a may be inversely proportional to the minimum value of the bending angle formed around the bending axis.

In an embodiment, the first recess R1 formed in the first non-planar portion may have a first width RW1 and a first depth RD1, the second recess R2-1 formed in the second non-planar portion may have a second width RW2-1 and a second depth RD2-1, and the third recess R2-2 formed in the third non-planar portion may have a third width RW2-2 and a third depth RD2-2.

In an embodiment, the first non-planar portion in which the first recess R1 is formed may have a first thickness T1 based on a thickness direction (e.g., the Z-axis direction in FIG. 4B). In an embodiment, a second planar portion (e.g., the second planar portion 262 of FIG. 2A) between the first non-planar portion and the second non-planar portion may have a second thickness T2. In an embodiment, the second non-planar portion in which the second recess R2-1 is formed may have a second thickness T2-1. In an embodiment, the third non-planar portion in which the third recess R2-2 is formed may have a third thickness T2-2. In an embodiment, a fourth planar portion (e.g., the fourth planar portion 266-3 of FIG. 2A) between the second non-planar portion and the third non-planar portion may have a fourth thickness T2-3 and a (2-3)-th width W2-3. In an embodiment, a third planar portion (e.g., the third planar portion 263 of FIG. 2A) may have a third thickness T3.

In an embodiment, when the first recess R1 is formed to be larger than the third recess R2-2 and the third recess R2-2 is formed to be larger than the second recess R2-1, the stiffness of the first non-planar portion may be less than the stiffness of the third non-planar portion, and the stiffness of the third non-planar portion may be less than the stiffness of the second non-planar portion. For example, the first width RW1 and the first depth RD1 of the first recess R1 may be greater than the third width RW2-2 and the third depth RD2-2 of the third recess R2-2, respectively, and in this case, the minimum value (e.g., 0 degrees) of the first bending angle (e.g., the first bending angle X1 of FIG. 3C) may be less than the minimum value (e.g., 70 degrees) of the third bending angle (e.g., the third bending angle X2-2 of FIG. 3C). For example, the third width RW2-2 and the third depth RD2-2 of the third recess R2-2 may be greater than the second width RW2-1 and the second depth RD2-1 of the second recess R2-1, respectively, and in this case, the minimum value (e.g., 70 degrees) of the third bending angle may be less than the minimum value (e.g., 90 degrees) of the second bending angle (e.g., the second bending angle X2-1 of FIG. 3C). For example, as the stiffness of a portion having a greater bendable angle range in a folded state is formed weaker, the stress acting on a non-planar portion according to folding of the display module 460 may be reduced.

In an embodiment, the width W2-3 of the fourth planar portion may be less than the width RW1 of the first recess R1. In an embodiment, the width W2-3 of the fourth planar portion may be greater than the width RW2-2 of the third recess R2-2. In an embodiment, the width RW2-2 of the third recess R2-2 may be greater than the width RW2-1 of the second recess R2-1.

In an embodiment, the thickness T1 of the first non-planar portion may be less than the thickness T2 of the second planar portion (e.g., the second planar portion 262 of FIG. 2A). In an embodiment, the thickness T2-1 of the second non-planar portion (e.g., the second non-planar portion 266-1 of FIG. 2A) may be less than the thickness T2 of the second planar portion and the thickness T2-3 of the fourth planar portion 266-3. In an embodiment, the thickness T2-2 of the third non-planar portion 266-2 may be less than the thickness T3 of the third planar portion (e.g., the third planar portion 263 of FIG. 2A) and the thickness T2-3 of the fourth planar portion (e.g., the fourth planar portion 266-3 of FIG. 2A). In an embodiment, the thickness T2-2 of the third non-planar portion may be less than the thickness T1 of the first non-planar portion (e.g., the first non-planar portion 265 of FIG. 2A) and less than the thickness T2-1 of the second non-planar portion.

Referring to FIG. 4C, in an embodiment, the second recess R2-1 may be formed to have substantially the same size as the third recess R2-2. For example, the second width RW2-1 of the second recess R2-1 may be substantially the same as the third width RW2-2 of the third recess R2-2, and the second depth RD2-1 may be substantially the same as the third depth RD2-2.

In an embodiment, the first recess R1, the second recess R2-1, and the third recess R2-2 may be formed on one of a first surface 460-21 of the glass cover 460-2a facing the flexible display panel 460-1 and a second surface 460-22 opposite to the first surface 460-21. For example, the first recess R1, the second recess R2-1, and the third recess R2-2 may all be formed on the first surface 460-21 of the glass cover 460-2a and may also be formed on the second surface 460-22. In an embodiment, the second recess R2-1 may be formed in a direction opposite to the third recess R2-2. For example, the second recess R2-1 may be formed in the first surface 460-21 of the glass cover 460-2a, and the third recess R2-2 may be formed on the second surface 460-22 of the glass cover 460-2a. Although not shown in the diagram, when the first recess R1, the second recess R2-1, and the third recess R2-2 are formed in the first surface 460-21, the glass cover may further include one or more recesses formed in the second surface 460-22 in an opposite direction and having substantially the same size as the recesses R1, R2-1, and R2-2. In an embodiment, the recesses R1, R2-1, and R2-2 formed in the glass cover 460-2a may have various shapes (e.g., sawtooth shape, trapezoidal shape, rectangular shape, triangular shape, etc.).

In an embodiment, the glass cover 460-2b may include one or more pattern regions in which a groove is formed in a lattice pattern in a region corresponding to the bending axis of the display module 460. In an embodiment, pattern regions P1, P2-1, and P2-2 may include the first pattern region P1 in which a first pattern is formed in the first non-planar portion along the first bending axis A1, the second pattern region P2-1 in which a second pattern is formed in the second non-planar portion along the second bending axis A2-1, and the third pattern region P2-2 in which a third pattern is formed in the third non-planar portion along the third bending axis A2-2. Hereinafter, in describing the first pattern region P1, the second pattern region P2-1, and the third pattern region P2-2, the length in the X-axis direction is referred to as a width based on a cross-section (e.g., the XZ plane in FIG. 4C) perpendicular to the first bending axis A1.

In an embodiment, as the width of a pattern region formed on the glass cover 460-2b increases, the bending operation of the electronic device performed based on the bending axis positioned in the pattern region may become easier. For example, the minimum value of the bending angle formed based on the bending axis positioned in the pattern region may decrease, or the maximum value of the bending angle may increase. In an embodiment, the width of the pattern region formed on the glass cover 460-2b may be inversely proportional to the minimum value of the bending angle formed around the bending axis.

In an embodiment, the first pattern region P1 may have a first pattern width PW1, the second pattern region P2-1 may have a second pattern width PW2-1, and the third pattern region P2-2 may have a third pattern width PW2-2. In an embodiment, when the first pattern region P1 is formed to be larger than the third pattern region P2-2 and the third pattern region P2-2 is formed to be larger than the second pattern region P2-1, the stiffness of the first non-planar portion may be less than the stiffness of the third non-planar portion, and the stiffness of the third non-planar portion may be less than the stiffness of the second non-planar portion. For example, the first pattern width PW1 of the first pattern region P1 may be greater than the third pattern width PW2-2 of the third pattern region P2-2, and in this case, the minimum value (e.g., 0 degrees) of the first bending angle may be less than the minimum value (e.g., 70 degrees) of the third bending angle. For example, the third pattern width PW2-2 of the third pattern region P2-2 may be greater than the second pattern width PW2-1 of the second pattern region P2-1, and in this case, the minimum value (e.g., 70 degrees) of the third bending angle may be less than the minimum value (e.g., 90 degrees) of the second bending angle.

In an embodiment, the first pattern, the second pattern, and the third pattern formed in the pattern regions P1, P2-1, and P2-2 may each include a slit formed through the glass cover 460-2b in a direction (e.g., the Z-axis direction in FIG. 4E) from the first surface 460-21 to the second surface 460-22. Although the diagrams only illustrate a Z-axis direction pattern, in an embodiment, each of the first pattern, the second pattern, and the third pattern may also include an X-axis direction pattern.

In an embodiment, a spacing formed by the slit in the second pattern region P2-1 may be substantially different from a spacing formed by the slit in the third pattern region P2-2. For example, a spacing in the X-axis direction of the second pattern may be different from a spacing in the X-axis direction of the third pattern. A spacing in the Y-axis direction of the third pattern may be different from a spacing in the Y-axis direction of the third pattern.

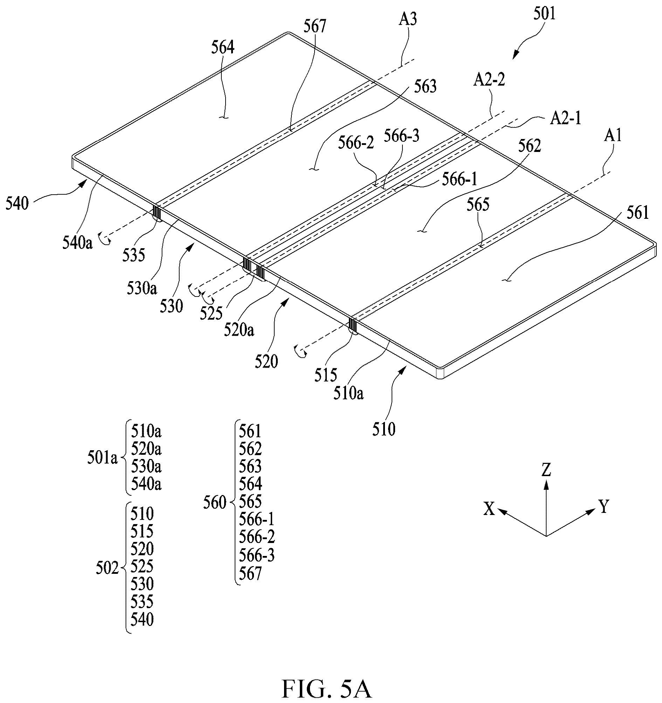

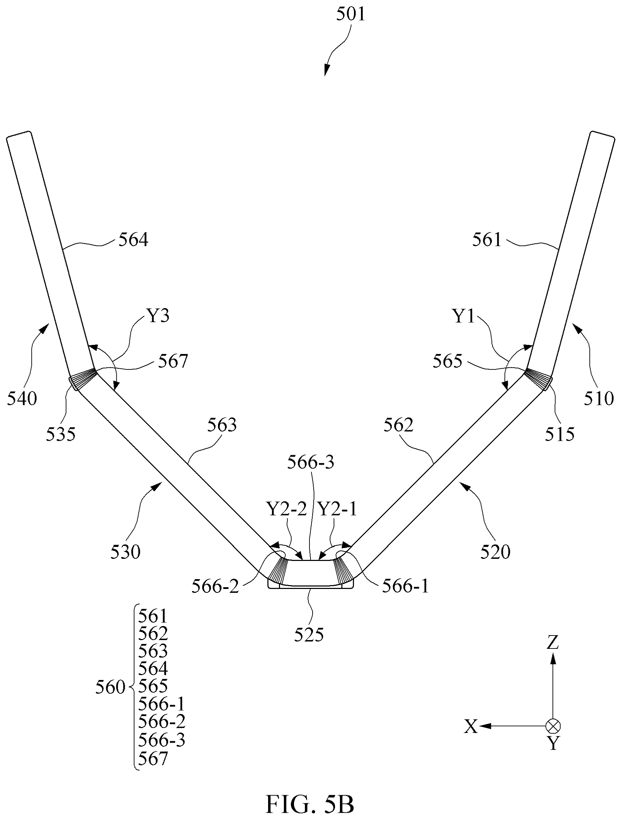

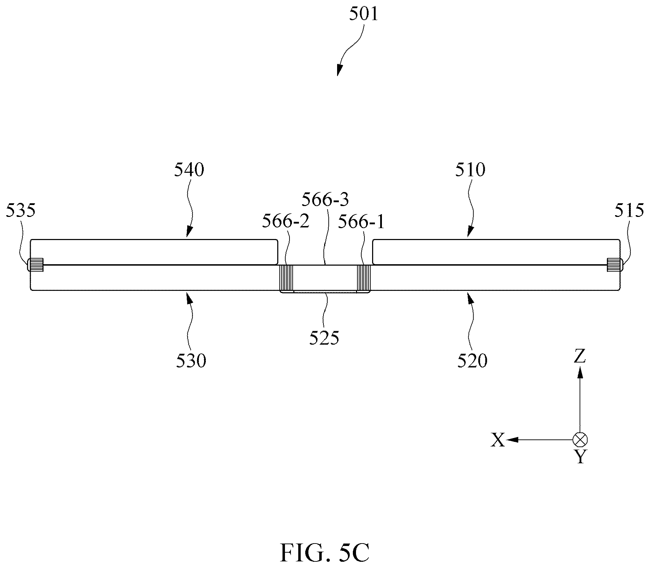

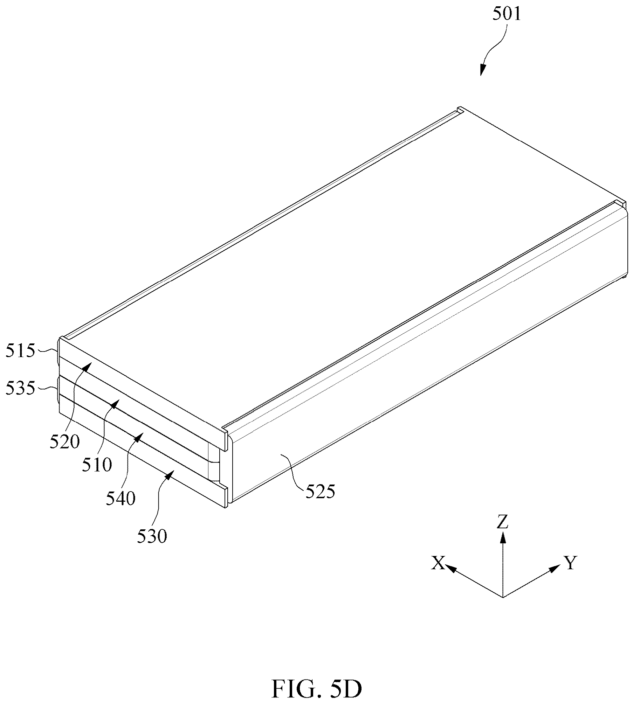

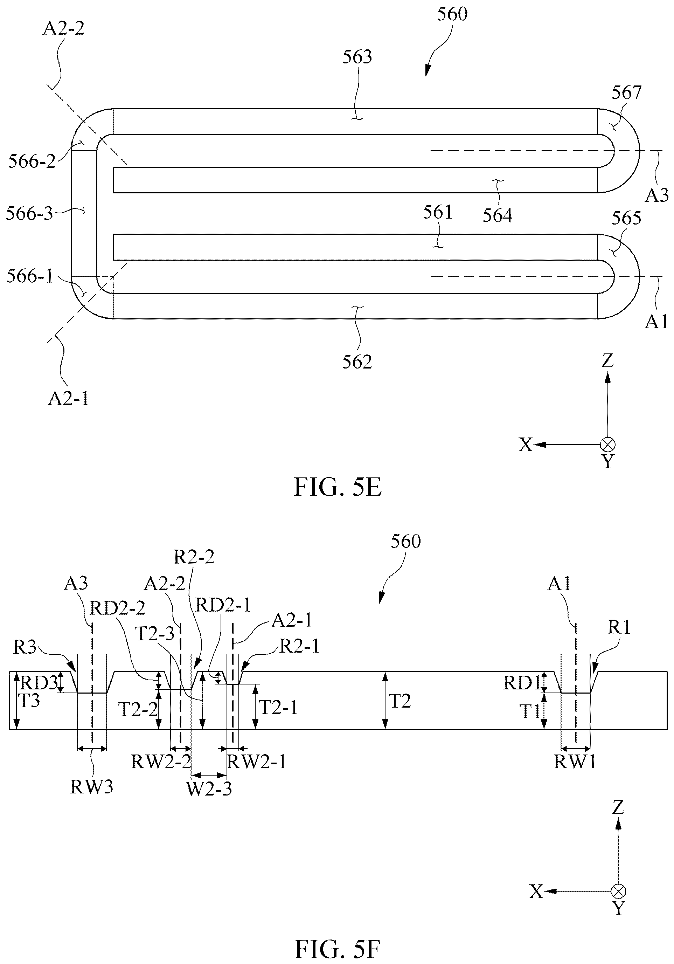

FIG. 5A is a perspective view of an electronic device in an unfolded state according to an embodiment, FIG. 5B is a diagram illustrating a bending angle of the electronic device according to an embodiment, FIG. 5C is a view of the electronic device in a folded state according to an embodiment, FIG. 5D is a cross-sectional view of the electronic device in a folded state in the +Y-axis direction according to an embodiment, FIG. 5E is a schematic view illustrating a glass cover based on the folded state of the electronic device illustrated in FIG. 5D, and FIG. 5F is a cross-sectional view of the glass cover in which a recess is formed, according to an embodiment.

Referring to FIGS. 5A to 5D, an electronic device 501 according to an embodiment (e.g., the electronic device 201 of FIG. 2A) may be provided in a bendable type. In an embodiment, the electronic device 501 may include a first housing portion 510 (e.g., the first housing portion 210 of FIG. 2A), a second housing portion 520 (e.g., the second housing portion 220 of FIG. 2A), a third housing portion 530 (e.g., the third housing portion 230 of FIG. 2A), a fourth housing portion 540, a display module (e.g., the display module 160 of FIG. 1), a first hinge housing portion 515 (e.g., the first hinge housing portion 215 of FIG. 2A), a second hinge housing portion 525 (e.g., the second hinge housing portion 225 of FIG. 2A), and a third hinge housing portion 535.

In an embodiment, the first housing portion 510, the second housing portion 520, the third housing portion 530, and the fourth housing portion 540 may form the exterior of the electronic device 501. In an embodiment, the first housing portion 510 and the second housing portion 520 may be rotatably connected to each other by the first hinge housing portion 515, the second housing portion 520 and the third housing portion 530 may be rotatably connected to each other by the second hinge housing portion 525, and the third housing portion 530 and the fourth housing portion 540 may be rotatably connected to each other by the third hinge housing portion 535.

In an embodiment, the first hinge housing portion 515 may rotatably connect the first housing portion 510 to the second housing portion 520. In an embodiment, the first housing portion 510 and the second housing portion 520 may be relatively rotated about a first bending axis A1 (e.g., the first bending axis A1 of FIG. 2A) by the first hinge housing portion 515.

In an embodiment, the second hinge housing portion 525 may rotatably connect the second housing portion 520 to the third housing portion 530. In an embodiment, the second housing portion 520 and the third housing portion 530 may be relatively rotated about a second bending axis A2-1 (e.g., the second bending axis A2-1 of FIG. 2A) and a third bending axis A2-2 (e.g., the third bending axis A2-2 of FIG. 2A) by the second hinge housing portion 525.

In an embodiment, the third hinge housing portion 535 may rotatably connect the third housing portion 530 to the fourth housing portion 540. In an embodiment, the third housing portion 530 and the fourth housing portion 540 may be relatively rotated about a fourth bending axis A3 by the third hinge housing portion 535.

In an embodiment, a glass cover 560 may include a first planar portion 561 (e.g., the first planar portion 261 of FIG. 2A) supported by the first housing portion 510, a second planar portion 562 (e.g., the second planar portion 262 of FIG. 2A) supported by the second housing portion 520, a third planar portion 563 (e.g., the third planar portion 263 of FIG. 2A) supported by the third housing portion 530, a fourth planar portion 566-3 (e.g., the fourth planar portion 266-3 of FIG. 2A), a fifth planar portion 564 supported by the fourth housing portion 540, a first non-planar portion 565 (e.g., the first non-planar portion 265 of FIG. 2A) supported by the first hinge housing portion 515, a second non-planar portion 566-1 (e.g., the second non-planar portion 266-1 of FIG. 2A) and a third non-planar portion 566-2 (e.g., the third non-planar portion 266-2 of FIG. 2A) supported by the second hinge housing portion 525, and a fourth non-planar portion 567 supported by the third hinge housing portion 535.

In an embodiment, the first planar portion 561 of the glass cover 560 may be supported by the first housing portion 510 disposed on the rear surface of the first planar portion 561. In an embodiment, the second planar portion 562 of the glass cover 560 may be supported by the second housing portion 520 disposed on the rear surface of the second planar portion 562. In an embodiment, the third planar portion 563 of the glass cover 560 may be supported by the third housing portion 530 disposed on the rear surface of the third planar portion 563. In an embodiment, the fifth planar portion 564 of the glass cover 560 may be supported by the fourth housing portion 540 disposed on the rear surface of the fifth planar portion 564.

In an embodiment, the first non-planar portion 565 of the glass cover 560 may be supported by the first hinge housing portion 515. In an embodiment, the first non-planar portion 565 may rotatably connect the first planar portion 561 to the second planar portion 562. In an embodiment, the first non-planar portion 565 may be at least partially bent about the first bending axis A1.

In an embodiment, the fourth non-planar portion 567 of the glass cover 560 may be supported by the third hinge housing portion 535. In an embodiment, the fourth non-planar portion 567 may rotatably connect the third planar portion 563 to the fifth planar portion 564. In an embodiment, the fourth non-planar portion 567 may be at least partially bent about the fourth bending axis A3.

In an embodiment, the second non-planar portion 566-1 and the third non-planar portion 566-2 of the glass cover 560 may be supported by the second hinge housing portion 525. In an embodiment, the second non-planar portion 566-1 and the third non-planar portion 566-2 may rotatably connect the second planar portion 562 to the third planar portion 563. In an embodiment, the second non-planar portion 566-1 and the third non-planar portion 566-2 may be at least partially bent about the second bending axis A2-1 and/or the third bending axis A2-2.

In an embodiment, the fourth planar portion 566-3 of the glass cover 560 may be disposed between the second non-planar portion 566-1 and the third non-planar portion 566-2 and may connect the second non-planar portion 566-1 to the third non-planar portion 566-2.

In an embodiment, the second non-planar portion 566-1 may be connected to the second planar portion 562. In an embodiment, the second non-planar portion 566-1 may connect the second planar portion 562 to the fourth planar portion 566-3. In an embodiment, the second non-planar portion 566-1 may be at least partially bent about the second bending axis A2-1 that is parallel to the first bending axis A1.

In an embodiment, the third non-planar portion 566-2 may be connected to the third planar portion 563. In an embodiment, the third non-planar portion 566-2 may connect the third planar portion 563 to the fourth planar portion 566-3. In an embodiment, the third non-planar portion 566-2 may be at least partially bent about the third bending axis A2-2 that is parallel to the second bending axis A2-1. In an embodiment, both the second non-planar portion 566-1 and the third non-planar portion 566-2 may be supported by the second hinge housing portion 525.

Hereinafter, the unfolded state and the folded state of the electronic device 501 according to an embodiment are defined. In an embodiment, the electronic device 501 may have a maximum size in an unfolded state. For example, based on the unfolded state of the electronic device 501, the glass cover 560 may form one plane. For example, in the unfolded state, the first planar portion 561, the second planar portion 562, the third planar portion 563, and the fifth planar portion 564 of the glass cover 560 may form one plane. In an embodiment, the electronic device 501 may have a minimum size in a folded state. For example, based on the folded state of the electronic device 501, the first planar portion 561 and the second planar portion 562 of the glass cover 560 may face each other, the third planar portion 563 and the fifth planar portion 564 may face each other, and the second planar portion 562 and the third planar portion 563 may face each other with the first planar portion 561 and the fifth planar portion 564 interposed therebetween. In an embodiment, when the electronic device 501 performs a bending operation between the unfolded state and the folded state, the first planar portion 561 of the glass cover 560 may cover the second planar portion 562, the fifth planar portion 564 may cover the third planar portion 563, and the second planar portion 562 and the third planar portion 563 may face each other with the first planar portion 561 and the fifth planar portion 564 interposed therebetween. However, this is just one example, and the folded and unfolded states of the electronic device 501 may be defined differently depending on various factors.

In the folded state according to an embodiment, the first non-planar portion 565 of the glass cover 560 may have a first radius of curvature (e.g., the first radius of curvature C1 of FIG. 3B), the second non-planar portion 566-1 may have a second radius of curvature (e.g., the second radius of curvature C2-1 of FIG. 3B), the third non-planar portion 566-2 may have a third radius of curvature (e.g., the third radius of curvature C2-2 of FIG. 3B), and the fourth non-planar portion 567 may have a fourth radius of curvature. In an embodiment, the first radius of curvature may be substantially the same as the fourth radius of curvature. In an embodiment, the second radius of curvature may be substantially the same as the third radius of curvature. In an embodiment, the second radius of curvature may be less than the first radius of curvature.

In an embodiment, when the electronic device 501 performs a bending operation between the folded state and the unfolded state, the first planar portion 561 and the second planar portion 562 of the glass cover 560 may form a first bending angle Y1 (e.g., the first bending angle X1 of FIG. 3C) with the first non-planar portion 565 interposed therebetween. In an embodiment, the second planar portion 562 and the fourth planar portion 566-3 may form a second bending angle Y2-1 (e.g., the second bending angle X2-1 of FIG. 3C) with the second non-planar portion 566-1 interposed therebetween. In an embodiment, the third planar portion 563 and the fourth planar portion 566-3 may form a third bending angle Y2-2 (e.g., the third bending angle X2-2 of FIG. 3C) with the third non-planar portion 566-2 interposed therebetween. In an embodiment, the third planar portion 563 and the fifth planar portion 564 may form a fourth bending angle Y3 with the fourth non-planar portion 567 interposed therebetween. In an embodiment, the first bending angle Y1 may have a minimum value (e.g., 0 degrees) based on a state in which the first planar portion 561 is maximally folded relative to the second planar portion 562. In an embodiment, the second bending angle Y2-1 may have a minimum value (e.g., 90 degrees) based on the state in which the fourth planar portion 566-3 is maximally folded relative to the second planar portion 562. In an embodiment, the third bending angle Y2-2 may have a minimum value (e.g., 70 degrees) based on the state in which the third planar portion 563 is maximally folded relative to the fourth planar portion 566-3. In an embodiment, the fourth bending angle Y3 may have a minimum value (e.g., 0 degrees) based on the state in which the fifth planar portion 564 is maximally folded relative to the third planar portion 563. In an embodiment, the minimum value (e.g., 0 degrees) of the first bending angle Y1 may be less than the minimum value (e.g., 70 degrees) of the third bending angle Y2-2. In an embodiment, the minimum value (e.g., 70 degrees) of the third bending angle Y2-2 may be less than the minimum value (e.g., 90 degrees) of the second bending angle Y2-1. In an embodiment, the minimum value (e.g., 0 degrees) of the fourth bending angle Y3 may be substantially the same as the minimum value (e.g., 0 degrees) of the first bending angle Y1.

In an embodiment, regions of the glass cover 560 (e.g., the glass cover 460-2a of FIG. 4A) respectively corresponding to the bending axes A1, A2-1, A2-2, and A3 of the display module (e.g., the display module 460 of FIG. 4A) may have different thicknesses from one another. For example, the glass cover 560 may include a first recess R1 (e.g., the first recess R1 of FIG. 4A) formed in the first non-planar portion 565 (e.g., the first non-planar portion 265 of FIG. 2A) along the first bending axis A1, a second recess R2-1 (e.g., the second recess R2-1 of FIG. 4A) formed in the second non-planar portion 566-1 (e.g., the second non-planar portion 266-1 of FIG. 2A) along the second bending axis A2-1, a third recess R2-2 (e.g., the third recess R2-2 of FIG. 4A) formed in the third non-planar portion 566-2 (e.g., the third non-planar portion 266-2 of FIG. 2A) along the third bending axis A2-2, and a fourth recess R3 formed in the fourth non-planar portion 567 along the fourth bending axis A3.

In an embodiment, the first recess R1 may have a first width RW1 and a first depth RD1, the second recess R2-1 may have a second width RW2-1 and a second depth RD2-1, the third recess R2-2 may have a third width RW2-2 and a third depth RD2-2, and the fourth recess R3 may have a fourth width RW3 and a fourth depth RD3. In an embodiment, the fourth width RW3 and the fourth depth RD3 of the fourth recess R3 may be substantially the same as the first width RW1 and the first depth RD1 of the first recess R1, respectively.

In an embodiment, the first non-planar portion 565 may have a first thickness T1, the second planar portion 562 may have a second thickness T2, the second non-planar portion 566-1 may have a second thickness T2-1, the third non-planar portion 566-2 may have a third thickness T2-2, and the fifth planar portion 564 may have a thickness T3.

In an embodiment, the thickness T1 of the first non-planar portion 565 may be less than the thickness T2 of the second planar portion 562. In an embodiment, the thickness T2-1 of the second non-planar portion 566-1 may be less than the thickness T2 of the second planar portion 562 and the thickness T2-3 of the fourth planar portion 566-3. In an embodiment, the thickness T2-2 of the third non-planar portion 566-2 may be less than the thickness T3 of the fifth planar portion 564 and the thickness T2-3 of the fourth planar portion. In an embodiment, the thickness T2-2 of the third non-planar portion 566-2 may be greater than the thickness T1 of the first non-planar portion 565 and less than the thickness T2-1 of the second non-planar portion 566-1.

An electronic device 101, 201, or 501 may include a bendable housing 202 or 502 including a first housing portion 210 or 510, a second housing portion 220 or 520, a third housing portion 230 or 530, a first hinge housing portion 215 or 515 rotatably connecting the first housing portion 210 or 510 to the second housing portion 220 or 520 and having a first width, and a second hinge housing portion 225 or 525 rotatably connecting the second housing portion 220 or 520 to a third housing portion 230 or 530 and having a second width that is greater than the first width, and a display module 160 or 460 including a flexible display panel 460-1 accommodated in the first housing portion 210 or 510, the first hinge housing portion 215 or 515, the second housing portion 220 or 520, the second hinge housing portion 225 or 525, and the third housing portion 230 or 530, and a glass cover 460-2 disposed on the flexible display panel 460-1. The glass cover 260, 460-2a, 460-2b, or 560 may include a first planar portion 261 or 561 accommodated in the first housing portion 210 or 510 and maintained substantially planar, a second planar portion 262 or 562 accommodated in the second housing portion 220 or 520 and maintained substantially planar, a third planar portion 263 or 563 accommodated in the third housing portion 230 or 530 and maintained substantially planar, a first non-planar portion 265 or 565 positioned between the first planar portion 261 or 561 and the second planar portion 262 or 562 and at least partially accommodated in the first hinge housing portion 215 or 515 so as to be at least partially bendable according to a relative bending operation of the first housing portion 210 or 510 and the second housing portion 220 or 520, a second non-planar portion 266-1 or 566-1 extending from the second planar portion 262 or 562 in a direction opposite to the first non-planar portion 265 or 565 and at least partially accommodated in one end of the second hinge housing portion 225 or 525 so as to be at least partially bendable according to a relative bending operation of the second housing portion 220 or 520 and the third housing portion 230 or 530, a third non-planar portion 266-2 or 566-2 extending in a direction from the third planar portion 263 or 563 to the second non-planar portion 266-1 or 566-1 and at least partially accommodated in another end of the second hinge housing portion 225 or 525 so as to be at least partially bendable according to a relative bending operation of the second housing portion 220 or 520 and the third housing portion 230 or 530, and a fourth planar portion 266-3 or 566-3 positioned between the second non-planar portion 266-1 or 566-1 and the third non-planar portion 266-2 or 566-2 and accommodated in the second hinge housing portion 225 or 525 so as to be maintained substantially planar during relative bending of the second housing portion 220 or 520 and the third housing portion 230 or 530 such that at least portions thereof overlap each other.

In an embodiment, the fourth planar portion 266-3 or 566-3 may have less flexibility than flexibility of each of the first non-planar portion 265 or 565, the second non-planar portion 266-1 or 566-1, and the third non-planar portion 266-2 or 566-2.

In an embodiment, a bendable angle range of the third non-planar portion 266-2 or 566-2 may be greater than a bendable angle range of the second non-planar portion 266-1 or 566-1.

In an embodiment, the bendable angle range of the third non-planar portion 266-2 or 566-2 may be less than a bendable angle range of the first non-planar portion 265 or 565.

In an embodiment, a width RW2-2 or PW2-2 of the third non-planar portion 266-2 or 566-2 may be less than a width RW1 or PW1 of the first non-planar portion 265 or 565 and greater than a width RW2-1 or PW2-1 of the second non-planar portion 266-1 or 566-1.

In an embodiment, a width W2-3 of the fourth planar portion 266-3 or 566-3 may be greater than the width RW2-1 or PW2-1 of the second non-planar portion 266-1 or 566-1 and the width RW2-2 or PW2-2 of the third non-planar portion 266-2 or 566-2.

In an embodiment, the width W2-3 of the fourth planar portion 266-3 or 566-3 may be less than the width RW1 or PW1 of the first non-planar portion 265 or 565.

In an embodiment, each of the first non-planar portion 265 or 565, the second non-planar portion 266-1 or 566-1, and the third non-planar portion 266-2 or 566-2 may include a recess R1, R2-1, or R2-2 formed in a thickness direction, a thickness T1 of the first non-planar portion 265 or 565 may be less than a thickness T2 of the second planar portion 262 or 562, a thickness T2-1 of the second non-planar portion 266-1 or 566-1 may be less than the thickness T2 of the second planar portion 262 or 562 and a thickness T2-3 of the fourth planar portion 266-3 or 566-3, a thickness T2-2 of the third non-planar portion 266-2 or 566-2 may be less than a thickness T3 of the third planar portion 263 or 563 and the thickness T2-3 of the fourth planar portion 266-3 or 566-3, and the thickness T2-2 of the third non-planar portion 266-2 or 566-2 may be greater than the thickness T1 of the first non-planar portion 265 or 565 and less than the thickness T2-1 of the second non-planar portion 266-1 or 566-1.

In an embodiment, the glass cover 260, 460-2a, 460-2b, or 560 may include a first surface 460-21 facing the flexible display panel 460-1 and a second surface 460-22 opposite to the first surface 460-21, and the recess R1, R2-1, or R2-2 may be formed in one of the first surface 460-21 and the second surface 460-22.

In an embodiment, the first non-planar portion 265 or 565 may include a first pattern region P1 in which a first pattern is formed in a longitudinal direction, the second non-planar portion 266-1 or 566-1 may include a second pattern region P2-1 in which a second pattern is formed in a longitudinal direction, and the third non-planar portion 266-2 or 566-2 may include a third pattern region P2-2 in which a third pattern is formed in a longitudinal direction.

In an embodiment, a width PW2-2 of the third pattern region P2-2 may be greater than a width PW2-1 of the second pattern region P2-1.

In an embodiment, a width PW1 of the first pattern region P1 may be greater than the width PW2-1 of the second pattern region P2-1 and the width PW2-2 of the third pattern region P2-2.

In an embodiment, the display module 160 or 460 may further include a polymer member 460-4 disposed on the glass cover 260, 460-2a, 460-2b, or 560 and a filling layer 460-3a or 460-3b disposed between the glass cover 260, 460-2a, 460-2b, or 560 and the polymer member to fill at least a portion of the first non-planar portion 265 or 565, the second non-planar portion 266-1 or 566-1, and the third non-planar portion 266-2 or 566-2.

In an embodiment, the bendable housing 502 may further include a fourth housing portion 540 and a third hinge housing portion 535 rotatably connecting the third housing portion 530 to the fourth housing portion 540 and having a third width less than the second width, and the glass cover 560 may include a fifth planar portion 564 accommodated in the fourth housing portion 540 and maintained substantially planar and a fourth non-planar portion 567 extending in a direction from the fifth planar portion 564 to the third planar portion 563 and at least partially accommodated in the third hinge housing portion 535 so as to be at least partially bendable according to a relative bending operation of the third housing portion 530 and the fourth housing portion 540.

In an embodiment, the fourth non-planar portion 567 may include a recess formed in a thickness direction or a pattern region in which a pattern is formed in a longitudinal direction.

An electronic device 101, 201, or 501 may include a bendable housing 202 or 502 including a first housing portion 210 or 510, a second housing portion 220 or 520, a third housing portion 230 or 530, a first hinge housing portion 215 or 515 rotatably connecting the first housing portion 210 or 510 to the second housing portion 220 or 520 and having a first width, and a second hinge housing portion 225 or 525 rotatably connecting the second housing portion 220 or 520 to a third housing portion 230 or 530 and having a second width that is greater than the first width, and a display module 160 or 460 including a flexible display panel 460-1 accommodated in the first housing portion 210 or 510, the first hinge housing portion 215 or 515, the second housing portion 220 or 520, the second hinge housing portion 225 or 525, and the third housing portion 230 or 530, and a glass cover 260, 460-2a, 460-2b, or 560 disposed on the flexible display panel 460-1. The glass cover 260, 460-2a, 460-2b, or 560 may include a first planar portion 261 or 561 accommodated in the first housing portion 210 or 510 and maintained substantially planar, a second planar portion 262 or 562 accommodated in the second housing portion 220 or 520 and maintained substantially planar, a third planar portion 263 or 563 accommodated in the third housing portion 230 or 530 and maintained substantially planar, a first non-planar portion 265 or 565 positioned between the first planar portion 261 or 561 and the second planar portion 262 or 562 and at least partially accommodated in the first hinge housing portion 215 or 515 so as to be at least partially bendable according to a relative bending operation of the first housing portion 210 or 510 and the second housing portion 220 or 520, a second non-planar portion 266-1 or 566-1 extending from the second planar portion 262 or 562 in a direction opposite to the first non-planar portion 265 or 565 and at least partially accommodated in one end of the second hinge housing portion 225 or 525 so as to be at least partially bendable according to a relative bending operation of the second housing portion 220 or 520 and the third housing portion 230 or 530, a third non-planar portion 266-2 or 566-2 extending in a direction from the third planar portion 263 or 563 to the second non-planar portion 266-1 or 566-1 and at least partially accommodated in another end of the second hinge housing portion 225 or 525 so as to be at least partially bendable according to a relative bending operation of the second housing portion 220 or 520 and the third housing portion 230 or 530, and a fourth planar portion 266-3 or 566-3 positioned between the second non-planar portion 266-1 or 566-1 and the third non-planar portion 266-2 or 566-2 and accommodated in the second hinge housing portion 225 or 525 so as to be maintained substantially planar during relative bending of the second housing portion 220 or 520 and the third housing portion 230 or 530 such that at least portions thereof overlap each other. The fourth planar portion 266-3 or 566-3 may have less flexibility than flexibility of each of the first non-planar portion 265 or 565, the second non-planar portion 266-1 or 566-1, and the third non-planar portion 266-2 or 566-2. Each of the first non-planar portion 265 or 565, the second non-planar portion 266-1 or 566-1, and the third non-planar portion 266-2 or 566-2 may include a recess R1, R2-1, or R2-2 formed in a thickness direction or a pattern region P1, P2-1, or P2-2 in which a pattern is formed in a longitudinal direction.

In an embodiment, a bendable angle range of the third non-planar portion 266-2 or 566-2 may be greater than a bendable angle range of the second non-planar portion 266-1 or 566-1, and the bendable angle range of the third non-planar portion 266-2 or 566-2 may be less than a bendable angle range of the first non-planar portion 265 or 565.

In an embodiment, the pattern region P1, P2-1, or P2-2 may include a slit formed to pass through between a first surface 460-21 of the glass cover 260, 460-2a, 460-2b, or 560 facing the flexible display panel 460-1 and a second surface 460-22 of the glass cover 260, 460-2a, 460-2b, or 560 opposite to the first surface 460-21.

In an embodiment, the display module 160 or 460 may further include a polymer member 460-4 disposed on the glass cover 260, 460-2a, 460-2b, or 560 and a filling layer 460-3a or 460-3b filled in the slit to fill at least a portion of the first non-planar portion 265 or 565, the second non-planar portion 266-1 or 566-1, and the third non-planar portion 266-2 or 566-2.

An electronic device 501 may include a bendable housing 502 including a first housing portion 510, a second housing portion 520, a third housing portion 530, a fourth housing portion 540, a first hinge housing portion 515 rotatably connecting the first housing portion 510 to the second housing portion 520 and having a first width, a second hinge housing portion 525 rotatably connecting the second housing portion 520 to the third housing portion 530 and having a second width that is greater than the first width, and a third hinge housing portion 535 rotatably connecting the third housing portion 530 to the fourth housing portion 540 and having a third width that is less than the second width and a display module 160 or 460 including a flexible display panel 460-1 accommodated in the first housing portion 510, the first hinge housing portion 515, the second housing portion 520, the second hinge housing portion 525, and the third housing portion 530, and a glass cover 560 disposed on the flexible display panel 460-1. The glass cover may include a first planar portion 561 accommodated in the first housing portion 510 and maintained substantially planar, a second planar portion 562 accommodated in the second housing portion 520 and maintained substantially planar, a third planar portion 563 accommodated in the third housing portion 530 and maintained substantially planar, a first non-planar portion 565 positioned between the first planar portion 561 and the second planar portion 562 and at least partially accommodated in the first hinge housing portion 515 so as to be at least partially bendable according to a relative bending operation of the first housing portion 510 and the second housing portion 520, a second non-planar portion 566-1 extending from the second planar portion 562 in a direction opposite to the first non-planar portion 565 and at least partially accommodated in one end of the second hinge housing portion 525 so as to be at least partially bendable according to a relative bending operation of the second housing portion 520 and the third housing portion 530, a third non-planar portion 566-2 extending from the third planar portion 563 to the second non-planar portion 566-1 and at least partially accommodated in another end of the second hinge housing portion 525 so as to be at least partially bendable according to a relative bending operation of the second housing portion 520 and the third housing portion 530, a fourth planar portion 566-3 positioned between the second non-planar portion 566-1 and the third non-planar portion 566-2 and accommodated in the second hinge housing portion 525 so as to be maintained substantially planar during relative bending of the second housing portion 520 and the third housing portion 530 such that at least portions thereof overlap each other, a fifth planar portion 564 accommodated in the fourth housing portion 540 and maintained substantially planar, and a fourth non-planar portion 567 extending in a direction from the fifth planar portion 564 to the third planar portion 563 and at least partially accommodated in the third hinge housing portion 535 so as to be at least partially bendable according to a relative bending operation of the third housing portion 530 and the fourth housing portion 540. The fourth planar portion 566-3 may have less flexibility than flexibility of each of the first non-planar portion 565, the second non-planar portion 566-1, and the third non-planar portion 566-2, and each of the first non-planar portion 565, the second non-planar portion 566-1, the third non-planar portion 566-2, and the fourth non-planar portion 567 may include a recess formed in a thickness direction or a pattern region in which a pattern is formed in a longitudinal direction.

In an embodiment, a width of the second pattern region may be substantially different from a width of the third pattern.

In an embodiment, the second pattern region may include a fourth pattern and a fifth pattern formed substantially parallel to each other in a longitudinal direction, the third pattern region may include a sixth pattern and a seventh pattern formed substantially parallel to each other in the longitudinal direction, and a first spacing between the fourth pattern and the fifth pattern may be substantially different from a second spacing between the sixth pattern and the seventh pattern.

In an embodiment, the second pattern region may include a fourth pattern and a fifth pattern formed to face the same direction while being spaced apart in a direction substantially perpendicular to the longitudinal direction, the third pattern region may include a sixth pattern and a seventh pattern formed to face the same direction while being spaced apart in a direction substantially perpendicular to the longitudinal direction, and a first spacing between the fourth pattern and the fifth pattern may be substantially different from a second spacing between the sixth pattern and the seventh pattern.

## Claims

1. An electronic device (101; 201; 501) comprising:
a bendable housing (202; 502) comprising:
a first housing portion (210; 510);
a second housing portion (220; 520);
a third housing portion (230; 530);
a first hinge housing portion (215; 515) rotatably connecting the first housing portion (210; 510) to the second housing portion (220; 520) and having a first width; and
a second hinge housing portion (225; 525) rotatably connecting the second housing portion (220; 520) to a third housing portion (230; 530) and having a second width greater than the first width; and
a display module (160; 460) comprising:
a flexible display panel (460-1) accommodated in the first housing portion (210; 510), the first hinge housing portion (215; 515), the second housing portion (220; 520), the second hinge housing portion (225; 525), and the third housing portion (230; 530); and
a glass cover (460-2) disposed on the flexible display panel (460-1),
wherein the glass cover (260; 460-2a; 460-2b; 560) comprises:
a first planar portion (261; 561) accommodated in the first housing portion (210; 510) and maintained substantially planar;
a second planar portion (262; 562) accommodated in the second housing portion (220; 520) and maintained substantially planar;
a third planar portion (263; 563) accommodated in the third housing portion (230; 530) and maintained substantially planar;
a first non-planar portion (265; 565) positioned between the first planar portion (261; 561) and the second planar portion (262; 562) and at least partially accommodated in the first hinge housing portion (215; 515) so as to be at least partially bendable according to a relative bending operation of the first housing portion (210; 510) and the second housing portion (220; 520); and
a second non-planar portion (266-1; 566-1) extending from the second planar portion (262; 562) in a direction opposite to the first non-planar portion (265; 565) and at least partially accommodated in one end of the second hinge housing portion (225; 525) so as to be at least partially bendable according to a relative bending operation of the second housing portion (220; 520) and the third housing portion (230; 530);
a third non-planar portion (266-2; 566-2) extending in a direction from the third planar portion (263; 563) to the second non-planar portion (266-1; 566-1) and at least partially accommodated in another end of the second hinge housing portion (225; 525) so as to be at least partially bendable according to a relative bending operation of the second housing portion (220; 520) and the third housing portion (230; 530); and
a fourth planar portion (266-3; 566-3) positioned between the second non-planar portion (266-1; 566-1) and the third non-planar portion (266-2; 566-2) and accommodated in the second hinge housing portion (225; 525) so as to be maintained substantially planar during relative bending of the second housing portion (220; 520) and the third housing portion (230; 530) such that at least portions thereof overlap each other.

2. The electronic device (101; 201; 501) of claim 1, wherein the fourth planar portion (266-3; 566-3) has less flexibility than flexibility of each of the first non-planar portion (265; 565), the second non-planar portion (266-1; 566-1), and the third non-planar portion (266-2; 566-2).

3. The electronic device (101; 201; 501) of claim 1 or 2, wherein a bendable angle range of the third non-planar portion (266-2; 566-2) is greater than a bendable angle range of the second non-planar portion (266-1; 566-1).

4. The electronic device (101; 201; 501) of any one of claims 1 to 3, wherein the bendable angle range of the third non-planar portion (266-2; 566-2) is less than a bendable angle range of the first non-planar portion (265; 565).

5. The electronic device (101; 201; 501) of any one of claims 1 to 4, wherein a width (RW2-2; PW2-2) of the third non-planar portion (266-2; 566-2) is less than a width (RW1; PW1) of the first non-planar portion (265; 565) and greater than a width (RW2-1; PW2-1) of the second non-planar portion (266-1; 566-1).

6. The electronic device (101; 201; 501) of any one of claims 1 to 5, wherein a width (W2-3) of the fourth planar portion (266-3; 566-3) is greater than the width (RW2-1; PW2-1) of the second non-planar portion (266-1; 566-1) and the width (RW2-2; PW2-2) of the third non-planar portion (266-2; 566-2).

7. The electronic device (101; 201; 501) of any one of claims 1 to 6, wherein the width (W2-3) of the fourth planar portion (266-3; 566-3) is less than the width (RW1; PW1) of the first non-planar portion (265; 565).

8. The electronic device (101; 201; 501) of any one of claims 1 to 7, wherein
each of the first non-planar portion (265; 565), the second non-planar portion (266-1; 566-1), and the third non-planar portion (266-2; 566-2) comprises a recess (R1; R2-1; R2-2) formed in a thickness direction,
a thickness (T1) of the first non-planar portion (265; 565) is less than a thickness (T2) of the second planar portion (262; 562),
a thickness (T2-1) of the second non-planar portion (266-1; 566-1) is less than the thickness (T2) of the second planar portion (262; 562) and a thickness (T2-3) of the fourth planar portion (266-3; 566-3),
a thickness (T2-2) of the third non-planar portion (266-2; 566-2) is less than a thickness (T3) of the third planar portion (263; 563) and the thickness (T2-3) of the fourth planar portion (266-3; 566-3), and
the thickness (T2-2) of the third non-planar portion (266-2; 566-2) is greater than the thickness (T1) of the first non-planar portion (265; 565) and less than the thickness (T2-1) of the second non-planar portion (266-1; 566-1).

9. The electronic device (101; 201; 501) of any one of claims 1 to 8, wherein
the glass cover (260; 460-2a; 460-2b; 560) comprises a first surface (460-21) facing the flexible display panel (460-1) and a second surface (460-22) opposite to the first surface (460-21), and
the recess (R1; R2-1; R2-2) is formed in one of the first surface (460-21) and the second surface (460-22).

10. The electronic device (101; 201; 501) of any one of claims 1 to 9, wherein
the first non-planar portion (265; 565) comprises a first pattern region (P1) in which a first pattern is formed in a longitudinal direction,
the second non-planar portion (266-1; 566-1) comprises a second pattern region (P2-1) in which a second pattern is formed in a longitudinal direction, and
the third non-planar portion (266-2; 566-2) comprises a third pattern region (P2-2) in which a third pattern is formed in a longitudinal direction.

11. The electronic device (101; 201; 501) of any one of claims 1 to 10, wherein a width (PW2-2) of the third pattern region (P2-2) is greater than a width (PW2-1) of the second pattern region (P2-1).

12. The electronic device (101; 201; 501) of any one of claims 1 to 11, wherein a width (PW1) of the first pattern region (P1) is greater than the width (PW2-1) of the second pattern region (P2-1) and the width (PW2-2) of the third pattern region (P2-2).

13. The electronic device (101; 201; 501) of any one of claims 1 to 12, wherein the display module (160; 460) further comprises:
a polymer member (460-4) disposed on the glass cover (260; 460-2a; 460-2b; 560); and
a filling layer (460-3a; 460-3b) disposed between the glass cover (260; 460-2a; 460-2b; 560) and the polymer member to fill at least a portion of the first non-planar portion (265; 565), the second non-planar portion (266-1; 566-1), and the third non-planar portion (266-2; 566-2).

14. The electronic device (501) of any one of claims 1 to 13, wherein
the bendable housing (502) further comprises:
a fourth housing portion (540); and
a third hinge housing portion (535) rotatably connecting the third housing portion (530) to the fourth housing portion (540) and having a third width less than the second width, and
the glass cover (560) comprises:
a fifth planar portion (564) accommodated in the fourth housing portion (540) and maintained substantially planar; and
a fourth non-planar portion (567) extending in a direction from the fifth planar portion (564) to the third planar portion (563) and at least partially accommodated in the third hinge housing portion (535) so as to be at least partially bendable according to a relative bending operation of the third housing portion (530) and the fourth housing portion (540).

15. The electronic device (501) of any one of claims 1 to 14, wherein the fourth non-planar portion (567) comprises a recess formed in a thickness direction or a pattern region in which a pattern is formed in a longitudinal direction.
